# EUROPÄISCHE PATENTSCHRIFT

(11) **EP 0 847 490 B1**
(45) Veröffentlichungstag und Bekanntmachung des Hinweises auf die Patenterteilung: **10.11.1999**
(21) Anmeldenummer: 96937992.4
(22) Anmeldetag: 31.08.1996
(51) Int. Cl.: F02B 75/06, H02P 7/00

(54) **ANTRIEBSSYSTEM**
DRIVE SYSTEM
SYSTEME D'ENTRAINEMENT

(30) Priorität: 31.08.1995 DE 19532163; 31.08.1995 DE 19532135; 31.08.1995 DE 19532136
(43) Veröffentlichungstag der Anmeldung: 17.06.1998
(73) Patentinhaber: ISAD Electronic Systems GmbH & Co.KG, 50733 Köln (DE); GRÜNDL UND HOFFMANN GmbH GESELLSCHAFT FÜR ELEKTROTECHNISCHE ENTWICKLUNGEN, 82319 Starnberg (DE)
(72) Erfinder: MASBERG, Ullrich, D-51503 Rösrath (DE); PELS, Thomas, D-46359 Heiden (DE); ZEYEN, Klaus-Peter, D-50670 Köln (DE); GRÜNDL, Andreas, D-81377 München (DE); HOFFMANN, Bernhard, D-82319 Starnberg (DE)
(74) Vertreter: von Samson-Himmelstjerna, Friedrich R., Dipl.-Phys.
(86) Internationale Anmeldenummer: DE9601664
(87) Internationale Veröffentlichungsnummer: WO9708440

(56) Entgegenhaltungen:
- EP-A- 0 354 790
- WO-A-95/02758
- DE-A- 4 423 577
- PATENT ABSTRACTS OF JAPAN vol. 013, no. 335 (M-856), 27.Juli 1989 & JP,A,01 113571 (MAZDA MOTOR CORP), 2.Mai 1989,
- PATENT ABSTRACTS OF JAPAN vol. 013, no. 484 (M-886), 2.November 1989 & JP,A,01 190922 (HITACHI LTD), 1.August 1989,

## Beschreibung

Die Erfindung betrifft ein Antriebssystem für ein Kraftfahrzeug mit wenigstens einem Antriebsmotor, insbesondere einem Verbrennungsmotor, sowie ein Verfahren zum Vermindern von antriebsstrangseitigen Drehmoment- und/oder Drehzahlschwankungen in einem solchen Antriebssystem.

In Kraftfahrzeugen treten im Antriebsstrang - dazu zählen insbesondere Antriebs-, Getriebe-, Gelenk-, Achswellen und z.T. auch Kurbelwellen - verschiedene Drehmomentschwankungen auf. Derartige Drehmomentschwankungen treten auf bei Überlagerung des von einem Antriebsmotor des Kraftfahrzeuges abgegebenen Drehmoments mit einem weiteren Drehmoment. Dieses weitere Drehmoment entsteht durch das Antriebssystem des Kraftfahrzeuges selbst und/oder gelangt von außerhalb in das Antriebssystem. Demgemäß ergibt sich ein resultierendes Drehmoment im Antriebsstrang, welches häufig sog. antriebsstrangseitigen Drehmomentschwankungen unterliegt. Ein Beispiel für ein durch das Antriebssystem selbst entstehendes Drehmoment sind Lastwechselschwingungen (periodische Schwankungen des Drehmoments aufgrund eines Lastwechsels); ein Beispiel für von außerhalb in das Antriebssystem gelangende Drehmomente sind Drehmomente, die durch Einwirkungen auf ein Antriebsrad in das Antriebssystem gelangen, z.B. wenn das Fahrzeug über eine Fahrbahnunebenheit fährt.

Unter Schwankung wird im Zusammenhang mit der Erfindung eine Abweichung von einem mittleren Wert verstanden. Darunter fallen sowohl periodische als auch nichtperiodische, insbesondere einmalige, Abweichungen.

Im allgemeinen führen Drehmomentschwankungen auch zu Drehzahlschwankungen. Sowohl die Drehmomentschwankungen als auch die Drehzahlschwankungen beeinträchtigen das Kraftfahrzeug sowie sein Fahrverhalten in verschiedenster Weise. Insbesondere verursachen diese Schwankungen eine Beeinträchtigung der Fahrsicherheit, des Fahrkomforts und des Verschleißes von Bauteilen bzw. erfordern aufgrund der erhöhten Verschleißanfälligkeit von schwankend beanspruchten Bauteilen eine größere Dimensionierung dieser Bauteile.

Im einzelnen erfolgt die Beeinträchtigung der Fahrsicherheit dadurch, daß Drehzahlschwankungen im Antriebsstrang zu Geschwindigkeitsschwankungen des Fahrzeugs führen. Diese Geschwindigkeitsschwankungen führen zum "Ruckeln" (Längsbeschleunigungen und -verzögerungen) des Fahrzeugs. Drehmomentschwankungen können zum Nicken des Fahrzeugs um seine Querachse führen. Beide Erscheinungen können die Spurstabilität des Fahrzeuges infolge der mit den Schwankungen einhergehenden Kräfte und Momente beeinträchtigen. Insbesondere können diese Erscheinungen, und zwar vor allem die Geschwindigkeitsschwankungen zum Schlupf zwischen Antriebsrädern und Fahrbahn (Antriebsschlupf) führen und damit eine sichere Spurführung verhindern.

Viele Fahrer neigen dazu, beim Durchfahren von Kurven "den Fuß vom Gas zu nehmen", also die Treibstoffzufuhr zu drosseln bzw. zu unterbinden; der Fahrer glaubt, durch Geschwindigkeitreduktion sicherer die Kurve durchfahren zu können. Ein derartiger Lastwechsel führt jedoch häufig ebenfalls zu Antriebsschlupf. Dabei kann die Spurführung verloren gehen, wobei das Fahrzeug tangential aus der Kurve getragen wird. Der Fahrer hat also durch Drosseln bzw. Unterbrechen der Treibstoffzufuhr - statt sein Fahrzeug in einen sichereren Zustand zu bringen - eine gefährliche Situation geschaffen.

Die meisten Fahrzeuginsassen empfinden die Erscheinungen "Ruckeln", "Wackeln" und "Nicken" des Fahrzeuges störend und daher als Beeinträchtigung des Fahrkomforts.

Die dauernde Beanspruchung von Bauteilen mit wechselnden Kräften bzw. Drehmomenten führt zu vorzeitiger Materialermüdung, z.B. zum Dauerbruch. Dies ist nachteilig, da durch vorzeitigen Verschleiß nicht nur höhere Reparaturkosten entstehen, sondern auch die gesamte Fahrzeugzuverlässigkeit leidet. Darüberhinaus ist ein Ausfall von Bauteilen im Antriebsbereich und Antriebsstrang - wegen des damit regelmäßig verbundenen Ausfalls des gesamten Antriebs - ein Sicherheitsrisiko, insbesondere in kritischen Fahrsituationen, z.B. beim Überholen oder Einfahren auf eine stark befahrene Kreuzung.

Schließlich erfordert der mit derartigen Drehmomentschwankungen einhergehende Verschleiß eine größere Dimensionierung verschiedener Bauteile im Antriebssystem bzw. Antriebsstrang. Dies verteuert nicht nur das Kraftfahrzeug, sondern erhöht auch sein Gewicht. - Eine Gewichtserhöhung ist zudem wegen höheren Treibstoffverbrauchs nachteilig.

Im Stand der Technik ist es bekannt, Lastwechselschwingungen durch derartige Steuerung des Verbrennungsmotors entgegenzuwirken, daß der Übergang bei Lastwechsel (der Übergang von einem Drehmomentniveau auf ein anderes) weicher wird. Da die Steuerung des Verbrennungsmotors jedoch relativ ungenau und träge, sowie die Höhe der Momente des Verbrennungsmotors begrenzt und daher häufig nicht ausreichend ist, ist diese Methode der Verminderung von Drehmomentschwankungen mittels Verbrennungsmotorsteuerung nur bedingt tauglich.

Die DE-A-44 23 577 beschreibt ein Antriebssystem mit einer elektrischen Maschine zur aktiven Schwingungsdämpfung, die in Abhängigkeit von gemessenen Drehzahl schwankungen bremsende und/oder antreibende Drehmomente aufbringen kann.

Die Erfindung zielt darauf ab, ein verbessertes Antriebssystem zur Verfügung zu stellen.

Dieses Ziel erreicht die Erfindung durch den Gegenstand gemäß Anspruch 1. Danach umfaßt das erfindungsgemäße Kraftfahrzeug-Antriebssystem wenigstens einen Antriebsmotor, insbesondere einen Verbrennungsmotor; einen Antriebsstrang, wenigstens eine elektrische Maschine, die den Antriebsmotor und/oder den Antriebsstrang mit einem bremsenden und/oder antreibenden Drehmoment beaufschlagen kann und/oder eine Kupplung im Antriebsstrang bildet; eine Sensorik zur Ermittlung des Drehmoments im Antriebsstrang; und wenigstens eine Steuerung/Regelung, welche die elektrische Maschine derart steuert/regelt, daß sie Drehmomentschwankungen entgegenwirkt, die von Lastwechseln oder von außen über ein Antriebsrad in den Antriebsstrang eingeleiteten Momentenschüben verursacht werden. Ein entsprechendes Verfahren ist in Anspruch 7 angegeben.

Grundsätzlich kommt für die Erfindung jegliche Art elektrischer Maschinen - z.B. Gleichstrom-, Wechselstrom-, Drehstromasynchron-, Drehstromsynchron- oder Linearmaschinem - in Betracht, die ein geegnetes Drehmoment aufbringen können. Besonders günstig ist eine Drehfeldmaschine in Asynchron- oder Synchronbauweise, deren Rotor ein Kurz-schlußläufer oder ein Rotor mit ausgeprägten Magnetpolen ist. Unter "Drehfeldmaschine" wird - im Gegensatz zu einer Stromwendermaschine - eine insbesondere kommmutatorlose Maschine verstanden, in der ein magnetisches Drehfeld auftritt, das vorzugsweise 360° überstreicht. Der Kurzschlußläufer bei der Asynchronmaschine kann z.B. ein hohler Käfigläufer mit Käfigstäben in Axialrichtung sein. Bei anderen Ausgestaltungen weist der Läufer Wicklungen auf, die über Schleifringe extern kurzgeschlossen werden können. Die ausgeprägten Magnetpole des Rotors bei der Synchronmaschine erreicht man z.B. durch Permanentmagnete oder bevorzugt durch Elektromagnete, die z.B. über Schleifringe mit Erregerstrom gespeist werden können.

Die elektrische Maschine kann also grundsätzlich jede Art von Maschine für Rotationsbewegungen sein. Insbesondere kann sie als elektrischer Motor und/oder Generator betrieben werden.

Ein Wechselrichter kann die für die magnetischen Felder benötigten Spannungen und/oder Ströme mit (innerhalb gewisser Grenzen) frei wählbarer Frequenz, Amplitude und/oder Phase erzeugen.

Die elektrische Maschine kann insbesondere auf zwei unterschiedliche Weisen eingebaut sein und damit unterschiedlich wirken:
1. Einerseits kann die elektrische Maschine mit ihrem Stator drehfest mit einem nicht drehbaren Teil verbunden sein, z.B. mit dem Motorgehäuse, dem Getriebegehäuse oder dem Chassis. Der Rotor der elektrischen Maschine ist entweder mit dem Antriebsstrang verbunden bzw. Teil des Antriebsstranges oder ist direkt mit der Kurbelwelle verbunden bzw. Teil des Antriebsmotors.
2. Andererseits kann die elektrische Maschine als Kupplung wirken, indem der Antriebsstrang, z.B. die Triebwelle, oder auch die Kurbelwelle durch die Maschine unterbrochen wird. Durch die Unterbrechung entstehen zwei Abschnitte im Antriebsstrang, wobei der eine Abschnitt mit dem Rotor und der andere Abschnitt mit dem Stator verbunden ist. Erzeugt die elektrische Maschine ein geeignetes Drehmoment erhält man eine quasi starre Kopplung beider Wellenabschnitte. Eine zusätzliche, mechanische Kopplung erreicht eine mechanische Verriegelung dieser Verbindung. Erzeugt die elektrische Maschine ein anderes, insbesondere ein vom Antriebsmotordrehmoment abweichendes Drehmoment, stellt sich sog. "Kupplungsschlupf" ein, d.h. beide Wellenabschnitte laufen mit unterschiedlicher Drehzahl weiter. - Die Stromversorgung der Statorwicklung erfolgt bei dieser Alternative bevorzugt über Schleifringe.

Diese beiden unterschiedlichen Einbauweisen der elektrischen Maschine werden nachfolgend begrifflich voneinander unterschieden. Die erste Einbauweise wird als "elektrische Maschine mit feststehendem Stator", die zweite als "elektrische Maschine mit Kupplungsfunktion" bezeichnet.

Die Variante elektrische Maschine mit feststehendem Stator kann ein bremsendes oder antreibendes Drehmoment auf den Antriebstrang, z.B. die Antriebswelle, oder den Antriebsmotor, z.B. die Kurbelwelle, aufbringen, ohne daß die Verbindung zwischen Antriebsmotor und Antriebsrädern von der elektrischen Maschine zu unterbrechen wäre. Die elektrische Maschine mit feststehendem Stator addiert daher ein (positives oder negatives) Drehmoment auf den Antriebsstrang bzw. auf den Antriebsmotor. Die elektrische Maschine wirkt daher parallel mit dem Antriebsmotor auf die Antriebsräder.

Die elektrische Maschine mit Kupplungsfunktion hingegen ist vom Prinzip eine mechanische Reihenschaltung des Antriebsmotors und der elektrischen Maschine. Diese Variante erlaubt es, eine Momentenübertragung im Antriebsstrang zu unterbinden bzw. zu vermindern, indem die elektrische Maschine Schlupf zuläßt, so daß "Stator" und Rotor mit unterschiedlichen Drehzahlen laufen. Die elektrische Maschine mit Kupplungsfunktion ist daher im wesentlichen ein passives Element, da sie prinzipiell das auf die Antriebsräder des Fahrzeuges ausgeübte Drehmoment nicht erhöhen kann. Allerdings gilt diese Aussage nur bei trägheitslosen Systemelementen. Im allgemeinen jedoch stellen die einzelnen Antriebssystemteile träge Massen dar, so daß zumindest kurzzeitig eine elektrische Maschine mit Kupplungsfunktion ein auf die Antriebsräder wirkendes Drehmoment erzeugen kann.

Das erfindungsgemäße Antriebssystem weist eine Steuerung oder eine Regelung auf. Beim Betreiben des Antriebssystem mit einer Steuerung ist eine genaue Kenntnis des Verhaltens des (gesamten) Antriebssystems notwendig, um geeignete Steuergesetze bereit zu stellen. Um jedoch auch den Einfluß unvorhersehbarer Störungen und Parameteränderungen auszuschalten, ist ein Regelkreis, also eine Regelung, notwendig. Mit einer Regelung läßt sich i.a. Drehmoment- und/oder Drehzahlschwankungen präziser entgegenwirken.

Die Steuerung oder Regelung gibt der elektrischen Maschine ein Signal, das sie veranlaßt, ein bestimmtes Drehmoment zu erzeugen. Dieses Drehmoment wirkt im Fall der elektrischen Maschine mit feststehendem Stator als bremsendes oder antreibendes Drehmoment auf den Antriebsstrang. Im Fall der elektrischen Maschine mit Kupplungsfunktion sorgt das Drehmoment für Kupplungsschlupf. Die Steuerung bzw. Regelung kann auf diese Weise antriebsstrangseitige Drehmoment- oder Drehzahlschwankungen vermindern oder ganz beseitigen.

Die Erfindung erzielt insbesondere die folgenden Vorteile:
- verminderte oder beseitigte antriebsstrangsseitige Drehmoment- und/oder Drehzahlschwankungen;
- erhöhte Fahrsicherheit durch Vermeiden plötzlich auftretender Drehmomente im Antrieb;
- erhöhter Fahrkomfort durch Beseitigen von Ruckeln und Wackeln des Fahrzeugs;
- geringerer Verschleiß;
- Bauteile können kleiner dimensioniert werden - dadurch Gewichtsersparnis;
- erhöhte Fahrzeugzuverlässigkeit;
- verminderte Reparaturkosten;
- geringere Unfallgefahr durch Schäden im Antriebssystem des Fahrzeugs.

Die Steuerung bzw. Regelung ist derart ausgelegt, daß sie bei bzw. nach Lastwechseln, insbesondere durch Torsionen im Antriebsstrang auftretende Schwankungen und/oder Schwingungen des Antriebsdrehmoments vermindert. Derartige Lastwechsel können beim plötzlichen Beschleunigen auftreten, aber auch beim Unterbrechen bzw. abrupten Drosseln der Treibstoffzufuhr. Ebenso führt eine Änderung der Steigung der Fahrbahn zu einem Lastwechsel.

Diese Lastwechsel führen dazu, daß der Antriebsstrang, insbesondere die Antriebswelle, infolge von - mit den Lastwechseln einhergehender - Drehmomentenänderungen tordiert oder - mit anderen Worten - wie eine Torsionsfeder "aufgezogen" wird.

Eine derartige Torsion im Antriebsstrang führt dazu, daß der Antriebsstrang zunächst Torsionsenergie aufnimmt. Dadurch überträgt sich ein vom Antriebsmotor erzeugtes Drehmoment nicht vollständig auf die Antriebsräder. Das vom Antriebsmotor erzeugte Drehmoment wird daher - entsprechend der aufgenommenen Torsionsenergie - vermindert. Die im Antriebsstrang gespeicherte Torsionsenergie übt dann auf die Antriebsräder und/oder den Antriebsmotor ein Drehmoment aus. Der Antriebsstrang bildet auf diese Weise ein aus zwei Energiespeichern - je einer für Rotations- und Torsionsenergie - bestehendes schwingungsfähiges System. Dieses System kann beide Energieformen, nämlich Rotations- und Torsionsenergie, ineinander überführen. Aufgrund dieser Eigenschaft kann es im Antriebsstrang zu Torsionsschwingungen kommen. Diese Torsionsschwingungen äußern sich einerseits durch Schwankungen der Drehzahl im Antriebsstrang, andererseits auch durch Schwankungen des antriebsstrangseitigen Drehmoments.

Das Antriebssystem ist in der Lage, diese Schwankungen zu dämpfen, und zwar kann die Dämpfung mehr oder weniger stark erfolgen. Bei schwacher Dämpfung werden die Schwankungen lediglich reduziert. Der grundsätzliche Effekt von Überschwingern im zeitlichen Verlauf des Drehmoments und/oder der Drehzahl bleibt jedoch erhalten. Bei starker Dämpfung weist der zeitliche Verlauf des Drehmoments und/oder der Drehzahl überhaupt keine Überschwinger auf. Die starke Dämpfung reduziert die maximale Beschleunigung des Fahrzeugs und ergibt daher ein ruhiges Fahrverhalten. Es kommt weder zu abrupten Beschleunigungen des Fahrzeuges noch zu "Ruckeln". Man erhält eine komfortbetonte Fahrcharackteristik.

Eine andere Art der Dämpfung besteht darin, nach erfolgtem Lastwechsel ("Gasgeben") ein erstes Überschwingen im zeitlichen Verlauf des Drehmoment auszunutzen und erst dann die Schwingung zu dämpfen. Die Beschleunigung im Augenblick des Lastwechsels ist dann sehr groß, was zu einer sportlichen Fahrcharakteristik führt.

Alternativ ist die Steuerung bzw. Regelung derart ausgelegt, daß sie über wenigstens ein Antriebsrad in den Antriebsstrang eingeleitete Drehmomentschwankungen vermindert. Das Antriebssystem wirkt daher nicht nur Drehmomentschwankungen entgegen, die innerhalb des Antriebsstranges z.B. durch Lastwechsel auftreten, sondern auch Drehmomentschwankungen, die durch ein von außerhalb des Antriebsstranges eingeleitetes Drehmoment verursacht werden. Insbesondere können "äußere Momentenschübe" derartige Drehmomentschwankungen verursachen.

Beispielsweise kann ein Schlagloch in der Fahrbahn Ursache eines äußeren Momentenschubes sein. Schlaglöcher haben verschiedene Effekte:

Ein erster Effekt ist, daß sich beim Durchfahren eines Schlaglochs (mit nur einem Antreibsrad) der vom Rad zurückgelegte Weg verlängert. Dabei verändert das Fahrzeug selbst jedoch seine Geschwindigkeit aufgrund seiner großen trägen Masse nicht oder nur unwesentlich. Das Rad, welches das Schlagloch durchrollt, erfährt eine momentane Beschleunigung. Diese Beschleunigung führt zu einem Drehmoment in der Antriebswelle und damit zu einem Momentenschub, der gewissermaßen von der Straße stammt. Bei Ausfahrt aus dem Schlagloch wird das Rad wieder auf seine Drehzahl vor Durchfahren des Schlaglochs abgebremst. Es erfährt dabei eine negative Beschleunigung.

Ein zweiter Effekt ist, daß beim Durchfahren eines Schlaglochs die Radachse eine Winkelbewegung ausführt. Diese Winkelbewegung kann jedoch, insbesondere bei Kardangelenken, zu einem Drehmoment auf die Antriebswelle führen, Z.B. kann eine Winkeländerung der durch das Kardangelenk verbundenenen Wellenabschnitte zu einer Drehung wenigstens einer der beiden Wellenabschnitte führen. Dadurch wird ebenfalls ein kurzzeitiges Drehmoment (Momentenschub) im Antriebsstrang erzeugt.

Ein anderer von außerhalb des Antriebsstranges eingeleiteter Momentenschub tritt beim Wechsel des Straßenbelages auf. Insbesondere kann sich der Antriebsschlupf bei Änderung des Reibbeiwertes des Straßenbelages, z.B, beim Übergang von Schnee auf festen Belag, schlagartig andern. Die schlagartige Antriebsschlupfänderung führt zu einem Momentenschub, und zwar beim Übergang Schnee/fester Belag zu einem den Antriebsstrang bremsenden Momentenschub.

Das erfindungsgemäße Antriebssystem kann auch diese von dem Straßenbelag erzeugten "äußeren Momentenschübe" vermindern oder ganz beseitigen, indem sie die elektrische Maschine gegen ein Gehäuse (z.B. vom Motor, Getriebe) abstützt oder indem die elektrische Maschine mit Kupplungsfunktion Kupplungsschlupf zuläßt.

Besonders bevorzugt ist die Steuerung bzw. Regelung derart ausgelegt, daß sie zur Verminderung der Drehmoment- und/oder Drehzahlschwankungen die bremsend und/oder antreibend wirkende elektrische Maschine veranlaßt, mit den Drehmomentschwankungen korrelierte, insbesondere entgegengerichtete oder gleichgerichtete, Drehmomente in den Antriebsstrang einzuleiten (Anspruch 2). Bei dieser Variante erzeugt die elektrische Maschine in der Einbauweise "elektrische Maschine mit feststehendem Stator" in Abhängigkeit der Schwankungen ein auf den Antriebsstrang wirkendes, antreibendes oder bremsendes Drehmoment, und zwar kann dieses Drehmoment den Schwankungen entweder entgegengerichtet oder gleichgerichtet sein.

Andererseits entlastet die elektrische Maschine den Antriebsstrang durch Aufbringen eines gleichgerichteten Drehmomentes im Bereich zwischen der elektrischen Maschine und dem Ort, an dem das die Schwankung verursachende Moment einwirkt, z.B. an einem Antriebsrad. Durch Aufbringen eines entgegengerichteten Drehmoments wird der Antriebsstrang im anderen Bereich, jenseits der elektrischen Maschine, z.B. zwischen elektrischer Maschine und Antriebsmotor entlastet.

Vorzugsweise ist die Steuerung/Regelung derart ausgelegt, daß sie zur Verminderung der Drehmoment- und/oder Drehzahlschwankungen die als Kupplung wirkende elektrische Maschine veranlaßt, mit den Drehmomentschwankungen korrelierte Kupplungsschlupfwerte bereitzustellen (Anspruch 3). Diese Variante erlaubt es, mittels Regulierung des Schlupfes (Unterschied zwischen den Drehgeschwindigkeiten) zwischen Stator und Rotor - also des sog. Kupplungsschlupfes - das vom Antriebsstrang zu übertragene Drehmoment zu variieren. Geht man vom Modell eines trägheitslosen Antriebssystems, insbesondere trägheitslosem Antriebsstrang und Antriebsmotor, aus, kann diese Variante das zu übertragene Drehmoment nur reduzieren, aber nicht erhöhen. Dieses Modell entspricht jedoch nicht exakt der Realität. In Wirklichkeit weisen alle Element des Antriebssystems, insbesondere der Antriebsstrang und der Antriebsmotor, träge Massen auf. Daher kann sich die elektrische Maschine gegen die träge Massen abstützen und ein Drehmoment auf die mit Rotor und Stator verbundenen Wellenabschnitte aufbringen. Damit kann die elektrische Maschine mit Kupplungsfunktion das zu übertragene Drehmoment auch erhöhen. Tritt eine Überhöhung des antriebsstrangsseitigen Drehmomentes auf, kann die elektrische Maschine durch Erhöhen des kupplungsschlupfes das zu übertragene Drehmoment vermindern. Tritt ein Einbruch des antriebsstrangsseitigen Drehmomentes auf, kann die elektrische Maschine - unter Berücksichtigung der trägen Massen des Antriebssystems - (zumindest kurzfristig) ein zusätzliches Drehmoment erzeugen. Mittels beider Maßnahmen - einzeln oder in Kombination - kann die elektrische Maschine den zeitlichen Verlauf des antriebsstrangseitigen Drehmoment-Verlaufs glätten.

Bei der Sensorik zur Ermittlung des Drehmoments im Antriebsstrang handelt es sich vorteilhaft um eine Drehmomentmeßnabe (Anspruch 4). Der Sensor kann auch ein magnetoelastischer Lastmeßbolzen oder ein Sensor beruhend auf dem Wirbelstrom-Prinzip, z.B. ein Wirbelstrom-Torsionssensor, sein. Diese Sensoren können innerhalb des Antriebsstrangs, aber auch innerhalb des Antriebsmotors, insbesondere in/an der Kurbelwelle, untergebracht sein.

Vorzugsweise ist das Dämpfungsmaß der dämpfend wirkenden elektrischen Maschine steuer- bzw. regelbar, insbesondere um bei einem Lastwechsel oder einer sonstigen Änderung des antriebsstrangseitigen Drehmoments und/oder der Drehzahl einen schnellen Übergang von einem zu einem anderen Drehmoment- bzw. Drehzahlniveau ohne, mit höchstens einem oder wenigen, Überschwinger(n) im zeitlichen Drehmoment-Verlauf bei zugleich geringer zeitlich-mittlerer Bedämpfung zu gewährleisten (Anspruch 5). Wie bereits oben beschrieben, kann die elektrische Maschine dämpfend wirken, um Schwankungen zu vermindern. Üblicherweise erfolgt eine Dämpfung in einem schwingenden system mit einem konstanten. Dämpfungsmaß. Die elektrische Maschine eröffnet jedoch durch geeignete Steuerung bzw. Regelung die Möglichkeit, dieses Dämpfungsmaß zu verändern und zwar auch innerhalb der Drehmoment- bzw. Drehzahlschwankung. Das Dämpfungsmaß selbst kann dabei eine zu steuernde bzw. regelnde Größe sein, d.h. das Dämpfungsmaß kann in Abhängigkeit der Drehmomentschwankungen verändert werden.

Bevorzugt wird die elektrische Maschine im Anfangsbereich, im mittleren Bereich oder im Endbereich des Antriebsstranges angeordnet (Anspruch 6).

"Anfangsbereich" bezeichnet den Bereich in der Nähe der Stelle, an welcher der Antriebsmotor das Antriebsmoment in den Antriebsstrang einleitet. Die elektrische Maschine ist also z.B. im Bereich des Antriebsmotors angeordnet, insbesondere zwischen Antriebsmotor und Getriebe oder auf der anderen Seite des Antriebsmotors, d.h. am freien Kubelwellenende.

"Endbereich" bezeichnet den Bereich in der Nähe der Stelle, an der Antriebsmomente aus dem Antriebsstrang in die Umgebung, z.B. auf die Straße, eingeleitet werden. Die elektrische Maschine ist also z.B. im Bereich eines Antriebsrades angeordnet.

"Mittlere Bereich" bezeichnet den Bereich zwischen Anfangs- und Endbereich. So kann die elektrische Maschine z.B. im Bereich des Getriebes oder eines Differentials angeordnet sein.

Diese verschiedenen Varianten erlauben unterschiedliche Wirkungen: Wird die elektrische Maschine im Anfangsbereich des Antriebsstranges angeordnet, d.h. in der Nähe des Antriebsmotors, kann sie bei einem Lastwechsel Torsionen im Antriebsstrang vermindern bzw. verhindern, indem sie die Änderung des auf den Antriebsstrang einwirkenden Drehmomentes gering hält. Bei Einleiten eines Momentenschubes von der Straße kann die elektrische Maschine mit feststehendem Stator verhindern, daß der Momentenschub ins Motorinnere, insbesondere zur Kurbelwelle, gelangt, z.B. indem die elektrische Maschine den Momentenschub gegen das Motorgehäuse abstützt.

Ähnliches gilt bezüglich des Getriebes. Ist die elektrische Maschine am Getriebe und zwar zwischen Getriebe und Antriebsstrang angeordnet, kann die elektrische Maschine Momentenschübe "von der Straße" am Getriebegehäuse abstützen, ohne daß diese Momentenschübe ins Getriebeinnere gelangen (die Momentschübe gelangen in diesem Fall auch nicht zum Antriebsmotor).

Falls die elektrische Maschine als Kupplung wirkt und in der Nähe des Motors angeordnet ist, kann eine Kupplungsschlupf-Regulierung die Torsionsschwingung im Antriebsstrang vermindern und Momentenschübe von der Straße abtrennen.

Ist hingegen die elektrische Maschine mit feststehendem Stator im Endbereich des Antriebsstranges, insbesondere im Bereich der Antriebsräder angeordnet, kann sie zwar den Torsionsschwingungseffekt im Antriebsstrang bei (plötzlichem) Lastwechsel nicht verhindern. Gleichwohl kann sie aber Schwankungen im Antriebsdrehmoment (dem auf die Antriebsräder wirkenden Drehmoment) vermindern. Treten Momentenschübe "von der Straße" auf, kann die im Endbereich des Antriebsstrangs angeordnete elektrische Maschine mit feststehendem Stator den gesamten Antriebsstrang entlasten, indem sie das Drehmoment gegen die Fahrzeugkarrosserie abstützt.

Handelt es sich bei der im Endbereich angeordneten elektrische Maschine um eine elektrische Maschine mit Kupplungsfunktion, erhöht - bei Auftreten eines Momentenschubes von der Straße - die elektrische Maschine den Kupplungsschlupf derart, daß es lediglich zu einer Beschleunigung des Antriebsrades kommt, aber nicht zu einer Einleitung beschleunigender Momente in den Antriebsstrang.

Die Erfindung wird nun anhand von Ausführungsbeispielen und der angefügten schematischen Zeichnung näher erläutert. In der Zeichnung zeigen:
- Fig. 1: eine schematische Darstellung eines Antriebssystems;
- Fig. 2: eine schematische Darstellung eines Wellenabschnitts zur Veranschaulichung des Torsionseffekts;
- Fig. 3: eine modellhafte Darstellung eines Antriebsstranges zur Veranschaulichung von Torsionseffekten;
- Fig. 4: ein schematisches Diagramm des antriebsstrangseitigen Drehmoment-Verlaufs als Funktion der Zeit;
- Fig. 5: eine schematische Darstellung eines Rades beim Durchfahren eines Schlaglochs;
- Fig. 6: eine schematische Darstellung eines Kardangelenks zur Veranschaulichung von winkelabhängigen Wellendrehungen;
- Fig. 7: eine schematische Darstellung des Reibbeiwertes und der Rotationsgeschwindigkeit eines Rades beim Übergang von einem glatten auf einen griffigen Fahrbahnbelag;
- Fig. 8: eine schematische Darstellung des antriebsstrangseitigen Drehmoment-Verlaufs als Funktion der Zeit;
- Fig. 9a-f: eine schematische Darstellung verschiedener Ausführungsbeispiele des Antriebssystems mit elektrischer Maschine;
- Fig. 10: eine schematische Darstellung einer auf einen Antriebsstrang angeordneten elektrischen Maschine mit feststehendem Stator;
- Fig. 11: eine schematische Darstellung einer im Antriebsstrang eingebauten elektrischen Maschine mit Kupplungsfunktion; und
- Fig. 12: ein Flußdiagramm eines Verfahrens zum Betreiben einer elektrischen Maschine in einem Antriebssystem.

In den Figuren tragen im wesentlichen funktionsgleiche Teile gleiche Bezugszeichen. Außerdem werden in der gesamten vorliegenden Beschreibung Zahlenangaben "x" im Sinn von wenigstens "x" und nur vorzugsweise im Sinn von genau "x" verstanden.

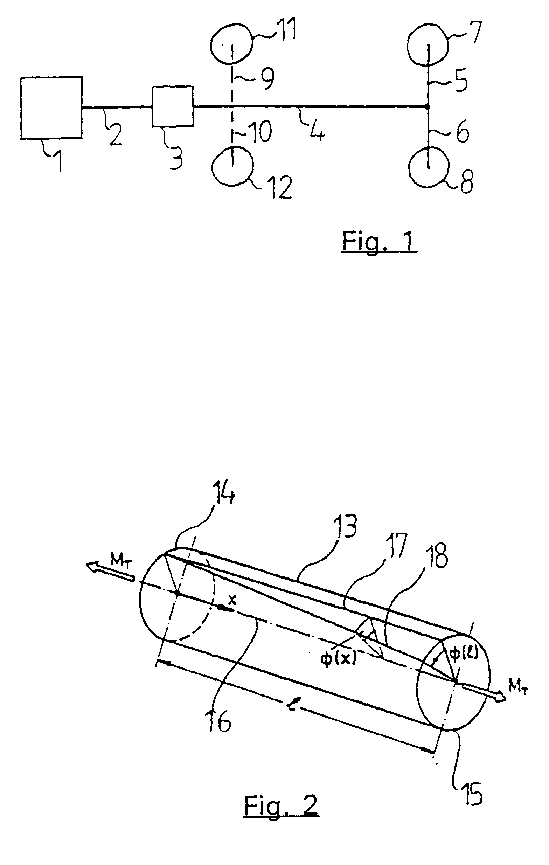

Fig. 1 veranschaulicht den prinzipiellen Aufbau eines Antriebssystems eines Kraftfahrzeuges. Ein Verbrennungsmotor 1 ist über eine Welle 2 mit einem Getriebe 3 verbunden. Das Getriebe 3 ist über eine Antriebswelle 4 mit Achsen 5 und 6 von Antriebsrädern 7 bzw. 8 verbunden. Diese Elemente 1 bis 8 sind grundsätzlich bei jedem Fahrzeug mit zwei angetriebenen Rädern verwirklicht. Die Erfindung ist jedoch auch auf Fahrzeuge mit einer anderen Anzahl angetriebender Räder anwendbar, einschließlich nur einem angetriebenen Rad, insbesondere jedoch auch Fahrzeuge mit Allradantrieb. Ein entsprechendes allradgetriebenes Fahrzeug ist in Fig. 1 angedeutet durch die mit der Antriebswelle 4 verbundenen unterbrochen dargestellten Achsen 9 und 10, welche mit zwei weiteren Antriebsrädern 11 und 12 verbunden sind. Alle Elemente dieses Antriebssystems, die funktionell betrachtet zwischen dem Verbrennungsmotor und den Antriebsrädern liegen, bilden den Antriebsstrang, dazu zählen insbesondere die Verbindungswelle 2, die Antriebswelle 4 und die Achsen 5, 6, 9 und 10. Außerdem wird die nicht dargestellte Kurbelwelle des Verbrennungsmotors ebenfalls zum Antriebsstrang gerechnet. Schließlich weist auch das Getriebe Wellen auf, welche Drehmomente vom Verbrennungsmotor auf die Antriebsräder übertragen. Auch diese Wellen zählen zum Antriebsstrang.

Fig. 2 veranschaulicht die Verdrehung einer der Wellen bzw. Achsen im Antriebsstrang oder ist als prinzipielles "Ersatzbild" eines Teils oder des gesamten Antriebsstrangs zu betrachten. Eine Ersatzwelle 13 wird an beiden Enden 14 und 15 mit entgegengerichteten Momenten M_{T} beaufschlagt. Dieses Torsionsmoment M_{T} verdreht die Welle über eine Länge l um einen Torsionswinkel φ(l). Entlang der Koordinate x verdreht sich die Ersatzwelle 13 um den Winkel φ(x). In Fig. 2 ist φ(x) proportional zu x. Man entnimmt diesen Zusammenhang Fig. 2 daraus, daß die (ohne Momentenbeaufschlagung) parallel zur Achse in der Ersatzwelle 13 verlaufende Gerade 17 bei Momentenbeaufschlagung zur *Geraden* 18 wird, also immer noch einen geraden Verlauf aufweist. Ein derartiger gerader Verlauf nach Momentenbeaufschlagung setzt im allgemeinen eine homogene Welle mit konstantem Querschnitt voraus. Ist diese Voraussetzung nicht erfüllt, weist die Gerade 17 nach Momentenbeaufschlagung keinen geradlinigen Verlauf mehr auf.

Die Ersatzwelle 13 nimmt infolge der Torsion um den Torsionswinkel φ(l) Torsionsenergie auf. Diese Torsionsenergie ist gleich dem Produkt aus Torsionsmoment M_{T} und Torsionswinkel φ(l). Wird die Ersatzwelle 13 am Ende 14 oder 15 festgehalten, während das andere Ende 15 bzw. 14 frei ist, führt die Ersatzwelle 13 - nachdem sie Torsionsenergie aufgenommen hat - eine freie Drehschwingung aus. Dabei wird Torsionsenergie in kinetische Energie, nämlich Rotationsenergie, umgewandelt. Nach dieser ersten Umwandlung erfolgt eine zweite Umwandlung. Dabei wird Rotationsenergie in Torsionsenergie umgewandelt. Diese Umwandlungsvorgänge wiederholen sich periodisch, im verlustfreien Fall unendlich oft. Daher kommt es zu einer Drehschwingung der Ersatzwelle. Im realen Fall hingegen wird aufgrund von Reibung die Schwingung gedämpft, wobei ein Teil der Energie in Wärme umgewandelt wird.

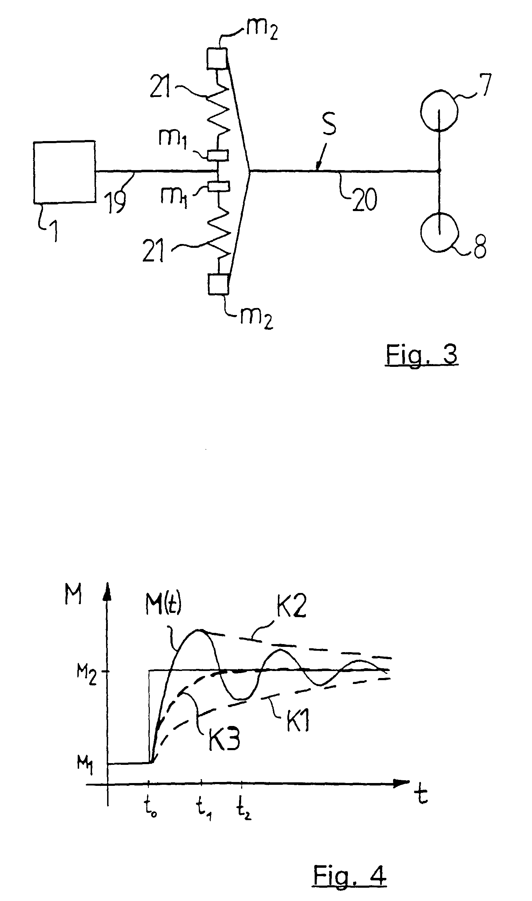

Fig. 3 veranschaulicht schematisch das torsionsfähige Antriebssystem eines Kraftfahrzeuges. Das Getriebe 3 ist aus Vereinfachungsgründen nicht dargestellt. Ferner wurden nur zwei Antriebsräder 7, 8 dargestellt. Die Anordnung vom Verbrennungsmotor 1 bis zu den Antriebsrädern 7, 8 repräsentiert das gesamte torsions- und schwingungsfähige Antriebssystem. Es wird repräsentiert durch zwei Wellenabschnitte 19 und 20, sowie durch modellhafte Darstellung träger Massen ml und m2. Die Masse m1 repräsentiert sämtliche Massen des Wellenabschnitts 19, die Masse m2 die des Wellenabschnitts 20. Beide Wellenabschnitte 19, 20 sind in diesem Modell modellhaft mit Federn 21 verbunden. Diese Federn repräsentieren die Torsionsfähigkeit des Antriebsstrangs.

Bei Beaufschlagung des Wellenabschnitts 19 durch ein vom Verbrennungsmotor abgegebenes Drehmoment nimmt die Masse ml infolge Beschleunigung Rotationsenergie auf. Dabei werden die Federn 21 aus ihrer Ausgangslage ausgelenkt, wobei sie Energie aufnehmen. Zeitverzögert zur Beschleunigung der Welle 19 erzeugen die über die Feder 21 übertragenen Kräfte bzw. Momente eine Beschleunigung des anderen Wellenabschnitts 20 samt Masse m2, wobei ebenfalls die Antriebsräder 7 und 8 beschleunigt werden.

Physikalische entsprechen die Darstellungen gemäß Fig. 2 und Fig. 3 einander. Die Federn 21 entsprechen der Torsionsfähigkeit der Ersatzwelle 13. Die Massen ml und m2 stellen die Trägheit der Ersatzwelle 13 dar.

Fig. 4 zeigt das vom Antriebsstrang, insbesondere vom Wellenabschnitt 20 übertragene Drehmoment. Die folgenden Überlegungen beziehen sich auf das bzw. die Momente in einem Schnitt durch diesen Wellenabschnitt 20.

Fig. 4 veranschaulicht den zeitlichen Verlauf des antriebsstrangseitigen Drehmomentes, z.B. an der Stelle S im Wellenabschnitt 20. Bis zum Zeitpunkt t₀ überträgt der Antriebsstrang ein erstes Drehmoment M₁. Zum Zeitpunkt t₀ erzeugt der Verbrennungsmotor 1 ein zweites, größeres Drehmoment M₂. Aufgrund der oben beschriebenen Torsionen im Antriebsstrang und der damit verbundenen verlustbehafteten Energieumspeichervorgänge (Torsions- in Rotationsenergie und umgekehrt) verläuft das zeitliche, antriebsstrangseitige Drehmoment M(t) wie eine gedämpfte Schwingung: Die Antwort des Antriebssystems auf einen Momentensprung vom ersten Drehmoment M₁ auf das zweite Drehmoment M₂ erreicht ihr erstes Maximum zu einem gegenüber dem Zeitpunkt t₀ späteren Zeitpunkt t₁. Dieses erste Maximum übersteigt jedoch den Wert des zweiten Drehmoments M₂. Nach Erreichen dieses ersten Maximums fällt die Kurve M(t) unter den Wert des zweiten Drehmoments M₂ ab und erreicht zum Zeitpunkt t₂ ein erstes Minimum. Nach Erreichen dieses ersten Minimums setzt sich die Schwingung des antriebsstrangseitigen Drehmoments fort und pendelt sich schließlich auf den Wert M₂ ein.

Aufgrund dieser zeitlichen Drehmomentschwankungen kommt es auch zu Schwankungen in der Drehzahl der Antriebswelle 4. Der Drehzahl-Verlauf verhält sich qualitativ ähnlich wie der Drehmoment-Verlauf in Fig. 4, jedoch ist die Zeitskala eine andere. Insbesondere erreicht die Drehzahl ein Maximum, wenn das Drehmoment M(t) den Wert M₂ annimmt. Umgekehrt nimmt die Drehzahl ihren zeitlichen Mittelwert an, wenn der zeitliche Drehmoment-Verlauf ein Maximum oder Minimum erreicht. Dieser Zusammenhang zwischen Drehzahl und Drehmoment entspricht einer Phasenverschiebung um 90° beider Größen. Die Phasenverschiebung beruht auf den energetischen Umspeichervorgänge von Torsionsenergie in Rotationsenergie.

Die Schwingungen sowohl der Drehzahl als auch des Drehmomentes wirken sich negativ auf das Fahrverhalten des Kraftfahrzeuges aus und es ist Gegenstand der Erfindung, diese Schwankungen oder Schwingungen zu vermindern bzw. auszugleichen. Das erfindungsgemäße Antriebssystem berücksichtigt jedoch auch noch andere, nachfolgend beschriebene Effekte.

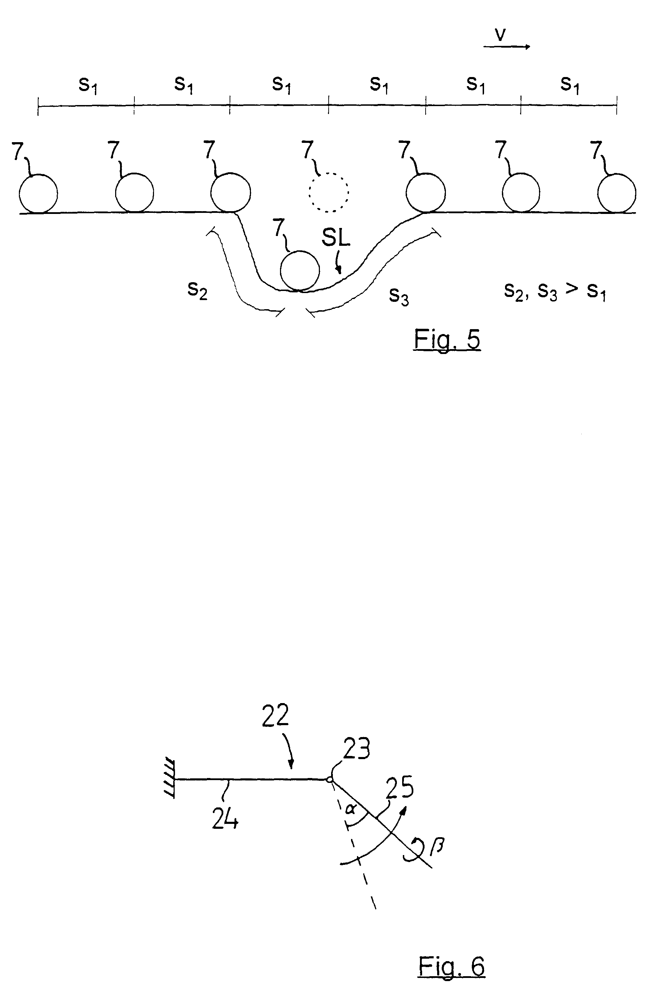

Fig. 5 veranschaulicht, wie ein Antriebsrad 7 durch ein Schlagloch SL rollt. Die übrigen (drei) Räder des Kraftfahrzeuges durchfahren dieses Schlagloch SL nicht. Dabei bewegt sich das Fahrzeug (nicht dargestellt) mit im wesentlichen konstanter Geschwindigkeit v fort. Daher legt außer dem Fahrzeug und auch das Antriebsrad 7 vor bzw. nach Durchfahren des Schlaglochs SL in gleichen Zeitabschnitten gleiche Strecken s₁ zurück. Beim Durchfahren des Schlaglochs SL muß das betroffene Antriebsrad 7 jedoch eine längere Strecke s₂, s₃ zurücklegen. Fig. 5 zeigt oberhalb des Schlaglochs SL in gestrichelter Darstellung das Antriebsrad 7, für den Fall daß kein Schlagloch vorhanden wäre.

Wegen des Schlaglochs SL und der längeren Strecken s₂, s₃ wird das Antriebsrad 7 beim Durchfahren des Schlag lochs SL beschleunigt. Dabei kommt es zu einer Drehmomentbeaufschlagung des Antriebsrades 7. Das Antriebsrad 7 nimmt zusätzliche Rotationsenergie auf, die im wesentlichen der kinetischen Energie des Fahrzeugs entzogen wird. Im allgemeinen ist dieser Energieentzug wegen der extremen Massenunterschiede von Fahrzeug und Antriebsrad 7 nicht spürbar. In besonderen Fällen ist er jedoch störend. Dann stellt die elektrische Maschine des erfindungsgemäßen Antriebssystems die zusätzliche Rotationsenergie durch Umwandlung elektrischer Energie bereit, so daß das Fahrzeug keine kinetische Energie verliert.

Ferner wird beim Durchfahren eines Schlaglochs die Achse des betroffenen Rades in ihrer Neigung verstellt. Eine derartige Winkeländerung in einem Antriebsstrang mit Gelenkwellen - diese sind beim Kraftfahrzeugantriebssystem üblich - führt zu einer zusätzlichen Rotation wenigstens einer der Wellenabschnitte einer Gelenkwelle.

Fig. 6 veranschaulicht das Prinzip dieser Rotation. Eine Gelenkwelle 22 weist ein Gelenk 23 auf und zwei Abschnitte 24, 25. Der Abschnitt 24 ist - zur Erläuterung - nichtdrehbar arretiert. Bei Drehung des Abschnittes 25 um das Gelenk 23 um den Winkel a vollführt der Abschnitt 25 der Gelenkwelle 22 eine Rotation um den Winkel β. Dieser Effekt läßt sich kurz wie folgt beschreiben: Bei Änderung des Winkels zweier Abschnitte 24, 25 einer Gelenkwelle 22 vollführt wenigstens ein Abschnitt 24 oder 25 eine Rotation um seine Längsachse.

Die beiden anhand von Fig. 5 und Fig. 6 erläuterten Effekte führen in der Regel nicht nur zu einem störenden Momentenschub, sondern auch zu einer Torsion im Antriebsstrang. Diese äußert sich wiederum in antriebsstrangseitigen Drehmomentschwankungen ähnlich wie in Fig. 4.

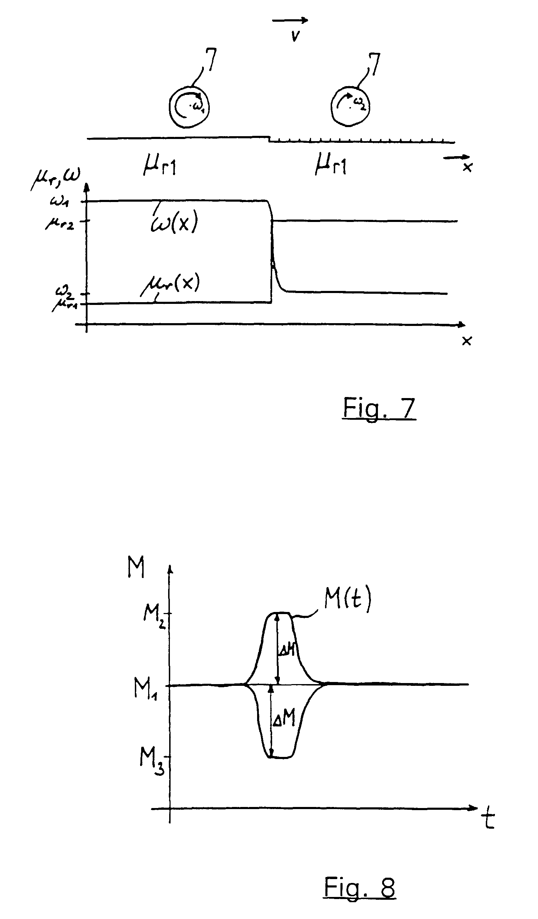

Fig. 7 veranschaulicht einen weiteren, von der Erfindung berücksichtigten bzw. verminderten Effekt. Das Antriebsrad 7 geht von einem Straßenbelag mit niedrigem Reibbeiwert µᵣ₁ auf einen Straßenbelag mit einem hohen Reibbeiwert µᵣ₂ über. Beim Befahren des Straßenbelages mit dem niedrigen Reibbeiwert µᵣ₁ hat das Antriebsrad 7 einen relativ großen Antriebsschlupf. Beim Übergang auf den Straßenbelag mit dem hohen Reibbeiwert µᵣ₂ verringert sich dieser Schlupf. Da das Fahrzeug aufgrund seiner trägen Masse seine Geschwindigkeit v beibehält, vermindert sich die Drehzahl des Antriebsrades 7 von einem Wert ω1 auf einen Wert ω2. Dieser Übergang erzwingt also eine Reduktion der Drehzahl des Antriebsrades 7. Diese Drehzahlreduktion geht einher mit einem den Antriebsstrang bremsenden Drehmoment. Dieses Drehmoment wird gewissermaßen von außen (von der Straße) in den Antriebsstrang eingeleitet. Durch diese Bremsung erreicht die Rotationsenergie des Antriebsstrangs ein niedrigeres Energieniveau. Die damit verbundene Energiedifferenz wird zum Teil in Reibungswärme zwischen Reifen und Fahrbahn und zum Teil in kinetische Energie des Fahrzeugs umgewandelt. Ferner führt dieses bremsend wirkende Drehmoment zu einer Torsion des Antriebsstranges mit der Folge von Drehmomentschwingungen ähnlich wie in Fig. 4.

Fig. 8 veranschaulicht den zeitlichen Verlauf des Drehmoments im Antriebsstrang bzw. am Antriebsrad 7 beim Beaufschlagen des Antriebsrades 7 bzw. des Antriebsstranges mit einem Momentenschub aufgrund eines Effektes gemäß Fig. 5 bis 7. Ähnlich wie in Fig. 4 ist in Fig. 8 das Drehmoment M(t) in Abhängigkeit der Zeit t aufgetragen. Aufgrund des Momentenschubes ΔM erhöht sich das antriebsstrangseitige Drehmoment vom Wert M₁ auf einen Wert M₁. Ist der Momentenschub ΔM entgegengesetzt gerichtet, vermindert sich das Moment M₁ um den Wert ΔM auf einen Wert M₃.

Derartige Momentenschübe sind nicht nur unangenehm für die Fahrzeuginsassen, sondern beanspruchen auch die Bauteile erheblich und beeinträchtigen die Fahrsicherheit. Außerdem sind sie auch geeignet, den Antriebsstrang "aufzuziehen" und zu antriebsstrangseitigen Drehmomentschwankungen (gem. Fig. 4) zu führen.

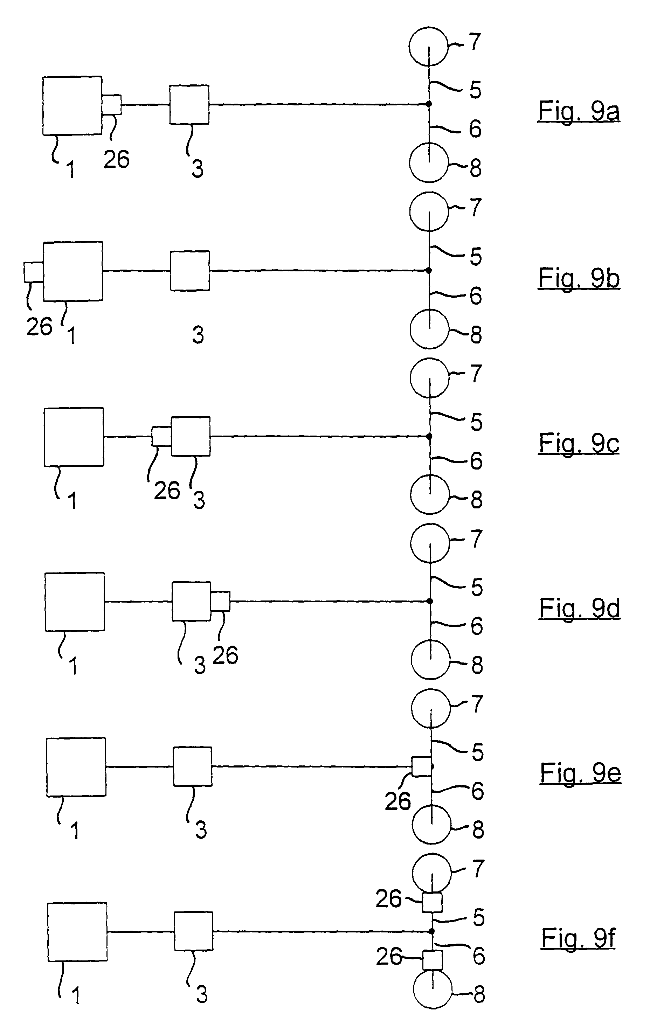

Die Fig. 9a-f zeigen verschiedene Ausführungsbeispiele eines Antriebssystems gemäß der Erfindung. Eine elektrische Maschine 26 ist im Antriebssystem vorgesehen, um die oben beschriebenen Effekte zu vermindern oder ganz zu verhindern. Diese elektrische Maschine kann an unterschiedlichen Stellen des Antriebssystems angeordnet sein und dadurch verschiedene Wirkungen erzielen.

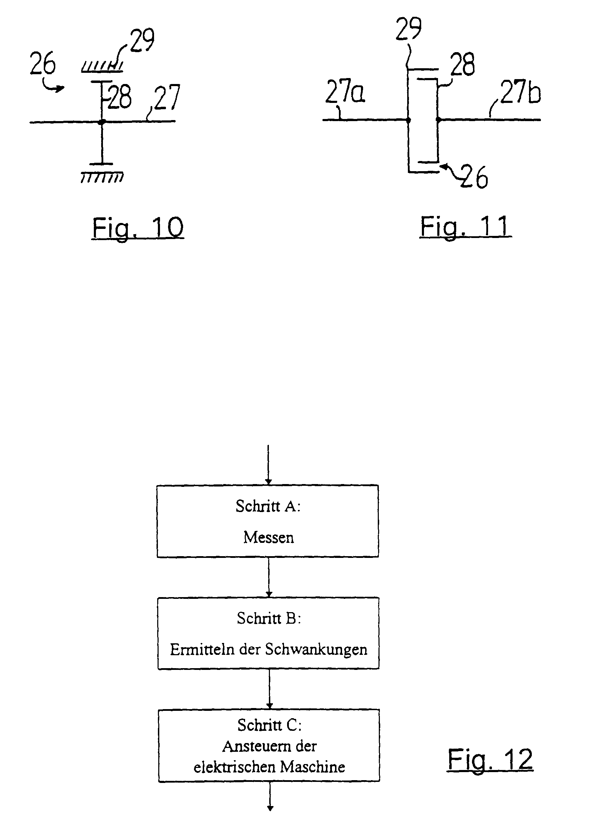

Fig. 10 und Fig. 11 zeigen verschiedene Einbauvarianten der elektrischen Maschine 26. Fig. 10 zeigt die Einbauvariante "elektrische Maschine mit feststehendem Stator". Fig. 11 zeigt die Einbauvariante "elektrische Maschine mit Kupplungsfunktion".

Gemäß Fig. 10 ist an einer Stelle des Antriebsstrangs 27 der Rotor 28 der elektrischen Maschine 26 befestigt. Der Rotor 28 dreht also mit dem entsprechenden Wellenabschnitt des Antriebsstrangs 27. Ein feststehender Stator 29 umgibt den Rotor 28. Dieser Stator 29 ist beispielsweise an einem Gehäuse des Verbrennungsmotors 1 oder des Getriebes 3 oder am Chassis des Fahrzeugs befestigt. Der Stator 29 ist deshalb drehfest gegenüber dem Rotor 28.

Bei der Einbauvariante gemäß Fig. 11 ist jedoch auch der Stator 29 drehbar. Dabei ist der Stator 29 mit einem Abschnitt 27a des Antriebsstrangs verbunden, während der Rotor 28 mit einem anderen Abschnitt 27b des Antriebsstrangs verbunden ist. Der Stator 29 ist also auch gegenüber dem Fahrzeug drehbar. Die elektrische Maschine 26 kontrolliert die Drehung zwischen Rotor 28 und Stator 29 durch entsprechende Steuerung bzw. Regelung. Bei einer besonderen - nicht dargestellten - Ausführungsform läßt sich die Verbindung zwischen Rotor 28 und Stator 29 mechanisch verriegeln. Damit laufen die beiden Wellenabschnitte des Antriebsstrangs 27 mit gleicher Drehzahl ähnlich wie in Fig. 10. Erfolgt keine mechanische Verriegelung, muß die elektrische Maschine 26 ein geeignetes Moment erzeugen, um beide Wellenabschnitte auf gleicher Drehzahl zu halten. Dieses Moment ist so groß, wie das von den Abschnitten 27a, 27b des Antriebsstrangs übertragene Drehmoment.

Fig. 9a zeigt die Anordnung der elektrischen Maschine 26 direkt am Verbrennungsmotor 1. Bei dieser Anordnung kann die elektrische Maschine 26 vom Verbrennungsmotor 1 erzeugten Lastwechseln derart entgegenwirken, daß es zu keinen oder nur zu geringen Schwingungen im antriebsstrangseitigen Drehmoment (z.B. gemäß Fig. 4) kommt. Grundsätzlich ist mit der elektrischen Maschine 26 nahezu jeder beliebige Drehmoment-Verlauf im Antriebsstrang möglich, insbesondere jedoch Drehmomentenverläufe gemäß den Kurven K1, K2 oder K3 in Fig. 4.

Kurve K1 zeigt den Drehmoment-Verlauf bei einer stark dämpfend wirkenden elektrischen Maschine. Die Dämpfung durch die elektrische Maschine ist so groß, daß es zu keinen Überschwingungen im Drehmoment-Verlauf mehr kommt. Eine derart starke Dämpfung führt allerdings zu einer Verminderung des Beschleunigungsvermögens des Fahrzeugs.

Kurve K2 zeigt die Aktivierung der elektrische Maschine 26 zum Zeitpunkt t₁ und zwar derart, daß sie ein zusätzliches antreibendes Drehmoment erzeugt. Dadurch werden die "Täler" innerhalb der Drehmomentschwingungen angehoben, so daß sich ein Kurvenverlauf ohne weitere Minima ergibt.

Kurve K3 zeigt als "Mischform" von Kurve K1 und Kurve K2 einen weiteren möglichen Drehmoment-Verlauf. Die elektrische Maschine 26 wirkt bei dieser Variante abwechselnd als Generator und als Motor. Und zwar wirkt sie als Generator, wenn die Kurve K3 unterhalb der Kurve M(t) verläuft und als Motor, wenn die Kurve K3 oberhalb der Kurve M(t) verläuft. Vorteilhafterweise speichert das System die beim generatorischen Betrieb der elektrischen Maschine 26 gewonnene elektrische Energie in einem Energiespeicher, z.B. in einem Kondensator oder in einer sog. Kurzzeitbatterie, und verwendet diese Energie wieder zum Betreiben der elektrischen Maschine 26 im motorischen Betrieb. Diese Betriebsweise benötigt keine oder nur wenig Energie, um die Drehmomentschwankungen auszugleichen.

Eine Kurve gemäß K2 ist besonders bei sportlicher Fahrweise wünschenswert. Eine Kurve gemäß K1 ist für eine besonders gleichmäßige Fahrt vorteilhaft. Durch eine Dämpfung, insbesondere gemäß Kurve K1 läßt sich die Torsion des Antriebsstranges vermindern und somit auch die Drehmoment- und/oder Drehzahlschwankungen innerhalb des Antriebsstranges. Die elektrische Maschine 26 bringt zur Erfüllung dieser Aufgaben sowohl antreibende als auch bremsende Drehmomente auf die Antriebswelle 4 auf.

Eine elektrische Maschine 26 mit Kupplungsfunktion kann bei Anordnung gemäß Fig. 9a das antriebsstrangseitige Drehmoment im wesentlichen nur vermindern, jedoch nicht erhöhen. Diese Verminderung wird durch Kupplungsschlupferhöhung erzielt, d.h., daß die elektrische Maschine 26 einen Drehzahlunterschied zwischen dem mit dem Stator verbundenen Wellenabschnitt und dem mit dem Rotor verbundenen Wellenabschnitt zuläßt. Damit kann man Kurven gemäß K1 in Fig. 4 erreichen. Nur wenn große träge Massen vorhanden sind, kann sich die elektrische Maschine mit Kupplungsfunktion gegen die trägen Massen abstützen und dadurch ein das Fahrzeug antreibendes Drehmoment erzeugen.

Falls wie in Fig. 9a die elektrische Maschine mit feststehendem Stator eingebaut ist, kann die elektrische Maschine Momentenschüben, die von der Straße herrühren, entgegenwirken, indem bei einem solchen Momentenschub die elektrische Maschine dieses Moment gegen das Gehäuse, an dem sie angebracht ist, abstützt. Dadurch pflanzt sich der Momentenschub nicht weiter als bis zur elektrischen Maschine fort. Somit kann beispielsweise das Innere des Motors entlastet werden - es wird hinsichtlich Momentenschüben von der Straße abgeschirmt. Eine elektrische Maschine 26 mit Kupplungsfunktion kann ebenfalls von der Straße verursachte Momentenschübe abtrennen, indem die elektrische Maschine 26 Kupplungschlupf zuläßt und somit den Momentenschub nicht in Richtung des Verbrennungsmotors 1 überträgt.

Fig. 9b skizziert die Anordnung der elektrischen Maschine 26 am Verbrennungsmotor 1 und zwar am freien Ende der Kurbelwelle des Verbrennungsmotors, d.h. an dem Kurbelwellenende, welches nicht mit dem Antriebsstrang verbunden ist. Bei dieser Ausführungsform ist nur die elektrische Maschine 26 mit feststehendem Stator 29 sinnvoll. Diese Anordnung erzielt im wesentlichen die gleichen Wirkungen wie die Anordnung gemäß Fig. 9a. Die Anordnung gemäß Fig. 9b ist jedoch vorteilhaft, wenn der zur Verfügung stehende Raum zwischen Verbrennungsmotor 1 und Getriebe 3 sehr klein ist.

Gemäß Fig. 9c und Fig. 9d ist die elektrische Maschine 26 am Getriebe 3 angeordnet und zwar entweder zwischen Verbrennungsmotor 1 und Getriebe 3 (gemäß Fig. 9c) oder zwischen Getriebe 3 und Antriebsrädern 7, 8 (gemäß Fig. 9d). Da das Getriebe 3 in der Regel in der Nähe des Verbrennungsmotors 1 angeordnet ist, haben diese beiden Anordnungen im wesentlichen gleiche Wirkungen wie die Anordnung gemäß Fig. 9a. Insbesondere sind beide Anordnungen in der Lage, von der Straße herrührende Momentenschübe vom Verbrennungsmotor 1 abzukoppeln. Sowohl beim Einbau der elektrischen Maschine 26 gemäß Fig. 9c als auch gemäß Fig. 9d ist der Einsatz der elektrischen Maschine 26 mit feststehendem Stator gemäß Fig. 10 und der Einsatz der elektrischen Maschine 26 mit Kupplungsfunktion gemäß Fig. 11 vorteilhaft. Dadurch ergeben sich vier verschiedene Einbauvarianten einer elektrischen Maschine 26 in der Nähe des Getriebes 3. Sie wirken jeweils unterschiedlich. Die Wirkungen entsprechen im wesentlichen denen der am Verbrennungsmotor angeordneten elektrischen Maschine 26 (mit feststehendem Stator bzw. mit Kupplungsfunktion) gemäß Fig. 9a.

Beim Einbau der elektrischen Maschine 26 mit feststehendem Stator gemäß Fig. 9e, nämlich am Endbereich des Antriebsstranges, jedoch nicht direkt an den Antriebsrädern 7, 8, läßt sich ein Aufziehen des Antriebsstrangs zwischen Verbrennungsmotor 1 und elektrischer Maschine 26 prinzipiell nicht verhindern. Eine elektrische Maschine mit Kupplungsfunktion an dieser Stelle, kann hingegen eine Torsion des Antriebsstranges im Bereich zwischen Verbrennungsmotor 1 und elektrischer Maschine 26 wesentlich vermindern, indem bei einem Lastwechsel die elektrische Maschine 26 den Kupplungsschlupf erhöht. Selbstverständlich ist dann das auf die Antriebsräder aufgebrachte Drehmoment um einen entsprechenden Betrag verringert.

Gemäß Fig. 9f ist je eine elektrischen Maschine 26 an jedem Antriebsrad 7, 8 angeordnet. Diese Anordnung ermöglicht es beim Verwenden einer elektrischen Maschine 26 mit Kupplungsfunktion, den gesamten Antriebsstrang einschließlich der Achsen 5, 6 der Antriebsräder 7, 8 vom restlichen Antriebsstrang abzutrennen. Bei Verwendung elektrischer Maschinen mit feststehendem Stator können von der Straße herrührende Momentenschübe in direkter Nähe der Räder ausgeglichen werden. Dies ist wegen der dann sehr geringen Abstände zwischen elektrischer Maschine 26 und Antriebsrädern 7, 8 vorteilhaft, da dadurch keine von der Straße herrührende Momentenschübe in den Abschnitt zwischen elektrischer Maschine 26 und Verbrennungsmotor 1 gelangen. Außerdem ist diese Variante vorteilhaft, da auf jedes Antriebsrad 7, 8 individuell eingewirkt werden kann. Dies ist insbesondere bei schlechten Straßenbelägen vorteilhaft, d.h. Straßen mit vielen Schlaglöchern und/oder unterschiedlichen Reibbeiwerten.

In den Fig. 9a-f wurden verschiedene Einbauvarianten der elektrischen Maschine einzeln erläutert. Die Erfindung bezieht sich jedoch nicht nur auf diese Einbauvarianten, sondern auch auf eine Kombination dieser Varianten, insbesondere können mehrere elektrische Maschinen an verschiedenen Stellen gem. den Fig. 9a-f des Antriebsstranges sinnvoll eingesetzt werden.

Fig. 12 zeigt ein Flußdiagramm zur Veranschaulichung des erfindungsgemäßen Verfahrens. Dieses Verfahren betrifft die Steuerung bzw. Regelung der elektrischen Maschine. Zunächst wird im Schritt A das Drehmoment im Antriebsstrang gemessen. Im Schritt B ermittelt die Steuerung bzw. Regelung die Schwankungen des Drehmoments. Im Falle der Steuerung (ohne Regelkreis) kann die elektrische Maschine im Schritt C derart angesteuert werden, daß sie ein geeignetes Drehmoment auf den Antriebsstrang ausübt bzw. den Kupplungsschlupf der elektrischen Maschine mit Kupplungsfunktion verändert. Dies geschieht durch Abruf geeigneter Werte aus einer Tabelle in Abhängigkeit der ermittelten Schwankungswerte. Eine solche Steuerung ist eine vom Aufbau einfachere Variante, da auf den Regelkreis verzichtet werden kann.

Wird anstelle einer Steuerung ein echte Regelung (mit Regelkreis) eingesetzt, läßt sich die zu regulierende Größe, nämlich das Drehmoment, derart regeln, daß auch unvorhersehbare Störungen erfaßt und beseitigt werden können.

Es wurde gezeigt, wie durch den Einbau einer elektrischen Maschine in einem Antriebssystem eines Kraftfahrzeuges auf verschiedenste Weise Schwankungen im antriebsstrangseitigen Drehmoment-verlauf verringert oder sogar ganz beseitigt werden können. Damit erzielt die Erfindung wesentliche Verbesserungen insbesondere im Bereich der Fahrsicherheit und des Fahrkomforts.

## Patentansprüche

1. Antriebssystem für ein Kraftfahrzeug, mit
- wenigstens einem Antriebsmotor (1), insbesondere einem Verbrennungsmotor;
- einem Antriebsstrang (27);
- wenigstens einer elektrischen Maschine (26), die den Antriebsmotor (1) oder den Antriebsstrang (27) mit einem bremsenden und/oder antreibenden Drehmoment beaufschlagen kann und/oder eine Kupplung im Antriebsstrang (27) bildet;
- einer Sensorik zur Ermittlung des Drehmoments im Antriebsstrang; und
- wenigstens einer Steuerung/Regelung, welche die elektrische Maschine (26) derart steuert/regelt, daß sie Drehmomentschwankungen entgegenwirkt, die von Lastwechseln oder von außen über ein Antriebsrad (7, 8, 11, 12) in den Antriebsstrang (27) eingeleiteten Momentenschüben verursacht werden.

2. Antriebssystem nach Anspruch 1, wobei die Steuerung/Regelung derart ausgelegt ist, daß sie zur Verminderung der Drehmoment- und/oder Drehzahlschwankungen die bremsend und/oder antreibend wirkende elektrische Maschine (26) veranlaßt, mit diesen Schwankungen korrelierte Drehmomente in den Antriebsstrang (27) einzuleiten.

3. Antriebssystem nach Anspruch 1, wobei die Steuerung/Regelung derart ausgelegt ist, daß sie zur Verminderung der Drehmoment- und/oder Drehzahlschwankungen die als Kupplung wirkende elektrische Maschine (26) veranlaßt, mit diesen Schwankungen korrelierte Kupplungsschlupfwerte bereitzustellen.

4. Antriebssystem nach einem der vorhergehenden Ansprüche, wobei die Sensorik eine Drehmomentmeßnabe umfaßt.

5. Antriebssystem nach einem der vorhergehenden Ansprüche, wobei das Dämpfungsmaß der dämpfend wirkenden elektrischen Maschine (26) steuerbar/regelbar ist, um bei einem Lastwechsel oder einer sonstigen Änderung des antriebsstrangsseitigen Drehmoments und/oder der Drehzahl einen schnellen Übergang von einem zu einem anderen Drehmoment- bzw. Drehzahlniveau ohne, mit höchstens einem oder wenigen Überschwinger(n) im zeitlichen Drehmoment- bzw. Drehzahl-Verlauf bei zugleich geringer zeitlich-mittlerer Bedämpfung zu erzielen.

6. Antriebssystem nach einem der vorhergehenden Ansprüche, wobei die elektrische Maschine (26) im Anfangsbereich, mittleren Bereich oder Endbereich des Antriebsstranges (27) angeordnet ist.

7. Verfahren zum Vermindern von antriebsstrangseitigen Drehmoment- und/oder Drehzahlschwankungen in einem Antriebssystem, wobei der antriebsstrangsseitige, zeitliche Drehmoment- und/oder Drehzahl-Verlauf gesteuert/geregelt durch die elektrische Maschine (26) beeinflußt wird, mit folgenden Schritten:
a) Ermitteln des Drehmoments im Antriebsstrang mit Hilfe einer Sensorik (Schritt A);
b) Ermitteln der Drehmomentschwankungen (Schritt B);
c) Ansteuern der elektrischen Maschine (26), so daß diese die Drehmomentschwankungen vermindert, durch
- Ausüben eines Drehmoments auf den Antriebsstrang (27) der bremsend und/oder antreibend wirkenden elektrischen Maschine (26) und/oder
- Verändern eines Kupplungsschlupfes der als Kupplung wirkenden elektrischen Maschine (26) (Schritt C).

## Claims

1. A drive system with
- at least one drive motor (1), especially an internal combustion engine;
- a drive train (27);
- at least one electric machine (26), which can apply a braking and/or driving torque to the drive motor (1) or drive train (27) and/or forms a coupling in the drive train (27);
- a sensory system for determining the torque in the drive train; and
- at least one open-loop/closed-loop control system, which controls/regulates the electric machine (26) so that it counteracts torque fluctuations caused by load changes or moment pushes introduced from outside into the drive train (27) by a drive wheel (7, 8, 11, 12).

2. A drive system according to Claim 1, wherein the open-loop/closed-loop control system is designed so that, in order to reduce the torque and/or speed fluctuations, it causes the electric machine (26) having a braking and/or driving action to introduce torques that are correlated with these fluctuations into the drive train (27).

3. A drive system according to Claim 1, wherein the open-loop/closed-loop control is designed so that, in order to reduce the torque and/or speed fluctuations, it makes the electric machine (26) acting as a coupling provide coupling slip values that are correlated with these fluctuations.

4. A drive system according to one of the preceding claims, wherein the sensory system comprises a torque metering hub.

5. A drive system according to one of the preceding claims, wherein the degree of dampening of the electric machine (26) having a dampening action can be controlled/regulated, in order to achieve, during a load change or another change in the drive train torque and/or rotary speed, a rapid transition from one torque or speed level to another with no overshooting, or with at most one or a few overshootings, in the time function of the torque or speed, with little time-averaged dampening.

6. A drive system according to one of the preceding claims, wherein the electric machine (26) is arranged in the starting region, middle region, or end region of the drive train (27).

7. A method for reducing drive train torque and/or speed fluctuations in a drive system, wherein the drive train's time function of the torque and/or rotary speed is controlled/regulated by the electric machine (26), with the following steps:
a) detection of the torque in the drive train by a sensory system (step A);
b) determination of the torque fluctuations (step B);
c) actuation of the electric machine (26), so that this reduces the torque and/or speed fluctuations, by
- exerting a torque on the drive train (27) by the electric machine (26) having a braking and/or driving action and/or
- changing a coupling slip of the electric machine (26) acting as a coupling (step C).

## Revendications

1. Système d'entraînement pour un véhicule automobile, comprenant :
- au moins un moteur d'entraînement (1), en particulier un moteur à combustion interne ;
- une chaîne cinématique (27) ;
- au moins une machine électrique (26) qui peut solliciter le moteur d'entraînement (1) ou la chaîne cinématique (27) avec un couple de freinage et/ou d'entraînement et/ou qui forme un embrayage dans la chaîne cinématique (27) ;
- un système de capteurs pour déterminer le couple développé dans la chaîne cinématique ; et
- au moins une commande/régulation qui commande/règle la machine électrique (26) de manière qu'elle combatte les fluctuations du couple qui sont provoquées par des inversions de charge ou par des impulsions de couple introduites de l'extérieur dans la chaîne cinématique (27) par l'intermédiaire d'une roue motrice (7, 8, 11, 12).

2. Système d'entraînement selon la revendication 1, dans lequel la commande/régulation est conçue de manière que, pour la réduction des fluctuations du couple ou du nombre de tours, la machine électrique (26) agissant dans le sens du freinage et/ou de l'entraînement fait introduire dans la chaîne cinématique (27) des couples qui sont en corrélation avec ces fluctuations.

3. Système d'entraînement selon la revendication 1, caractérisé en ce que la commande/régulation est conçue de manière que, pour réduire les fluctuations du couple et/ou du nombre de tours, elle amène la machine électrique (26) travaillant en embrayage à établir des valeurs de patinage d'embrayage en corrélation avec ces fluctuations.

4. Système d'entraînement selon une des revendications précédentes, dans lequel l'ensemble de capteurs est constitué par un moyeu de mesure du couple.

5. Système d'entraînement selon une des revendications précédentes, dans lequel le degré d'amortissement de la machine électrique (26) travaillant dans le sens de l'amortissement est de préférence susceptible d'être commandé/réglé, pour assurer, dans le cas d'une inversion de charge ou d'une autre modification du couple dans la chaîne cinématique et/ou du nombre de tours, un passage rapide d'un niveau de couple ou d'un nombre de tours à un autre, sans suroscillation ou avec au maximum une ou quelques suroscillations dans la variation dans le temps du couple ou, respectivement, du nombre de tours, avec en même temps un amortissement faible en moyenne dans le temps.

6. Système d'entraînement selon une des revendications précédentes, dans lequel la machine électrique (26) est agencée dans la région initiale, la région centrale ou la région terminale de la chaîne cinématique (27).

7. Procédé pour réduire les fluctuations du couple et/ou du nombre de tours de la chaîne cinématique d'un système d'entraînement, dans lequel la variation dans le temps du couple et/ou du nombre de tours dans la chaîne cinématique est influencé, par commande/régulation par la machine électrique (26), comprenant les phases suivantes :
a) déterminer le couple dans la chaîne cinématique à l'aide d'un ensemble de capteur (phase A);
b) déterminer les fluctuations du couple (phase B) ;
c) piloter la machine électrique (26) de manière que cette dernière réduise les fluctuations du couple, par les actions suivantes :
- exercer un couple sur la chaîne cinématique (27) de la machine électrique (26) à action de freinage et/ou d'entraînement, et/ou
- modifier le patinage d'embrayage de la machine électrique (26) agissant comme embrayage (phase C).
